# FASCICULE DE BREVET EUROPEEN

(11) **EP 2 688 158 B1**
(45) Date de publication et mention de la délivrance du brevet: **23.08.2017**
(21) Numéro de dépôt: 13176435.9
(22) Date de dépôt: 15.07.2013
(51) Int. Cl.: H01S 3/067, H01S 3/13, H01S 3/23

(54) **Laser de puissance avec dispositif auto-adaptatif de mise en phase d'amplificateurs optiques fibrés**
Leistungsstarker Laser mit selbst angleichender Vorrichtung zur Synchronisierung von optischen Faserverstärkern
Power laser with self-adapting device for phasing fibre optical amplifiers

(30) Priorité: 20.07.2012 FR 1202063
(43) Date de publication de la demande: 22.01.2014
(73) Titulaire: Thales, 92400 Courbevoie (FR)
(72) Inventeur: Lallier, Eric, 94230 Cachan (FR)
(74) Mandataire: Esselin, Sophie

(56) Documents cités:
- EP-A1- 2 136 239
- EP-A2- 0 952 642
- EP-A2- 1 041 686
- US-A1- 2009 201 575
- BELLANGER C ET AL: "Coherent fiber combining by digital holography", OPTICS LETTERS, OSA, OPTICAL SOCIETY OF AMERICA, WASHINGTON, DC, US, vol. 33, no. 24, 15 décembre 2008 (2008-12-15), pages 2937-2939, XP001521056, ISSN: 0146-9592, DOI: 10.1364/OL.33.002937

## Description

Le domaine de l'invention est celui des sources laser de très forte puissance présentant une qualité de faisceau proche de la limite de diffraction. La montée en puissance des lasers à solides, et en particulier des lasers à fibres, constitue un enjeu majeur pour de nombreuses applications industrielles, scientifiques, et optroniques.

Dans bien des cas, il est aussi souhaitable que cette montée en puissance ne s'accompagne pas d'une dégradation de la qualité de faisceau et/ou de la cohérence temporelle de la source. La puissance émise par une fibre laser ou un amplificateur à fibre est en pratique limitée par l'apparition d'effets non-linéaires néfastes et/ou l'endommagement en raison de la faible dimension du mode guidé lorsque l'on cherche à garantir une émission monomode. En conséquence, et en dépit d'importants efforts technologiques consentis, la puissance maximale rapportée à ce jour est de l'ordre de 1 kW pour un amplificateur à fibre monomode cohérent.

Une solution à ce problème est la combinaison cohérente qui consiste à synchroniser en phase un grand nombre d'émetteurs laser indépendants ou un grand nombre d'amplificateurs en parallèle. On peut aboutir ainsi à une puissance multipliée par le nombre d'émetteurs avec la luminance associée à celle d'un seul émetteur. Ce concept connu depuis longtemps fait de nouveau l'objet d'un grand intérêt en raison du développement récent des lasers à fibres de puissance.

L'approche la plus courante consiste à utiliser un laser maître cohérent de faible puissance, à séparer son faisceau en N faisceaux (à l'aide de coupleurs à fibres), puis à amplifier chaque canal séparément à l'aide d'amplificateurs à fibres. Une partie du faisceau de sortie recombiné est extraite afin de procéder à une mesure de la phase relative de chaque fibre et de pouvoir appliquer un signal de correction sur des modulateurs de phase électro-optiques placés en amont de chaque canal d'amplification. On réalise de la sorte une pré-compensation de la phase via une boucle de contre-réaction. Le problème de cette approche dite « active » est que la mesure de la phase devient complexe lorsque le nombre de canaux augmente, or c'est généralement ce que l'on cherche. Il faut d'autre part pouvoir réaliser cette mesure, et les calculs qui s'en suivent, avec une fréquence de répétition suffisante pour couvrir le spectre des déphasages d'origine thermique ou vibratoire (quelques 100 Hz). Finalement, cette méthode suppose de disposer d'un grand nombre de modulateurs de phase électro-optiques qui restent des objets relativement coûteux.

Une solution plus originale a récemment été proposée par le Demandeur et fait l'objet d'un dépôt d'une demande de brevet FR 2932929.

Elle propose notamment un dispositif auto-adaptatif permettant de s'affranchir à la fois de la mesure de la phase, des calculs nécessaires à la contre-réaction, et des modulateurs de phase. Elle repose sur le principe suivant : la phase relative de chaque fibre amplificatrice est sondée à l'aide d'un laser de référence (issu du laser maître par exemple), et enregistrée à l'aide d'un hologramme numérique sur un capteur matriciel de type CCD. L'hologramme numérique est retranscrit sur un modulateur spatial de lumière matriciel de type LCOS (cristaux liquides), qui est utilisé pour diffracter dans l'ordre -1, l'onde signal en amont de l'amplificateur. Cette onde diffractée est la conjuguée en phase de l'onde sonde transmise de sorte que le signal amplifié en sortie des fibres amplificatrices est automatiquement en phase. Ce procédé est par ailleurs compatible d'un grand nombre de canaux (N>100) et d'une bande passante supérieure à 100 Hz.

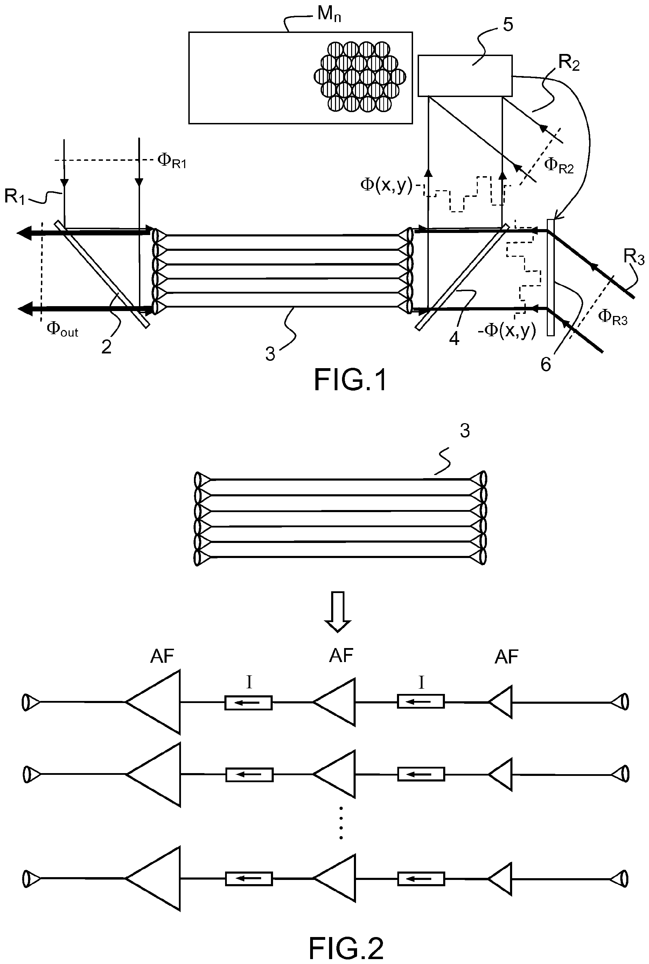

La figure 1 illustre ce principe et met en évidence l'utilisation de trois faisceaux avec un front d'onde plan, R₁, R₂, et R₃, qui peuvent d'ailleurs être issus d'un même laser cohérent. Le faisceau R₃ est le faisceau signal qui doit être amplifié. Le faisceau R₁ est le faisceau qui sert à sonder via une lame séparatrice 2, la variation de phase relative entre les fibres amplificatrices 3. Le faisceau R₂ sert de référence plane pour interférer avec la sortie du faisceau R₁ au travers d'une seconde lame séparatrice 4, et permet d'enregistrer un réseau de franges sur une caméra 5. L'hologramme numérique Hₙ ainsi enregistré est transposé au modulateur spatial de lumière (SLM) 6, qui diffracte le faisceau R₃ dans l'ordre -1 (avec un angle - θ si l'hologramme a été enregistré avec un angle θ). Cet ordre de diffraction permet de générer une onde conjuguée en phase, i.e., la loi de phase du front d'onde du faisceau R₃ après diffraction est - ϕ(x,y) si la phase du faisceau sonde R₁ est ϕ (x,y) en sortie du réseau de fibres. On réalise ainsi une pré-compensation de la distorsion de phase du faisceau R₃ à amplifier qui permet d'obtenir en sortie, un front d'onde plan ϕₒᵤₜ.

Une limitation majeure de cette solution vient du fait que la sonde et le signal sont propagés en sens contraire. Or, dans les systèmes d'amplification à fibres de forte puissance, un canal d'amplification est toujours constitué de plusieurs étages d'amplification mis en cascade et isolés optiquement. La figure 2 illustre à cet effet, des chaînes d'amplifications mises en parallèle et comportant chacune un ensemble d'amplificateurs AF séparés par des isolateurs I.

Cette cascade d'amplificateurs permet d'adapter les caractéristiques des fibres 3 de chaque étage, à la puissance du signal à amplifier et permet surtout de prévenir une auto-oscillation et un endommagement de la chaîne d'amplification dans la mesure où le gain total de la chaîne peut être considérable (> 50 dB). Dans ces conditions, la méthode présentée précédemment n'est pas applicable car la sonde ne peut pas être transmise à travers les isolateurs optiques. D'autre part, il n'est pas non plus possible de propager la sonde dans le même sens que le signal car il serait alors impossible de distinguer la sonde du signal après le prélèvement en sortie.

En définitive, le procédé décrit ci-dessus peut uniquement être implémenté dans les systèmes comportant un seul étage d'amplification ou entre l'avant dernier et le dernier étage. Cette option n'est pas souhaitable en raison des pertes du modulateur spatial et de sa faible tenue au flux.

Pour résoudre le problème précité, la solution ainsi proposée dans la présente invention consiste à reprendre le principe auto-adaptatif présenté précédemment et décrite dans la demande de brevet FR 2932929, du Demandeur, en modifiant les propriétés du faisceau sonde afin qu'il puisse être co-propagé avec le signal, puis différencié du signal après prélèvement à la sortie de l'amplificateur.

Cette solution est basée sur une différenciation temporelle. L'avantage principal est qu'il est dès lors possible de concilier cette technique auto-adaptative de mise en phase avec les architectures en cascade d'amplificateurs à fibres couramment utilisées pour atteindre des puissances importantes par canal. Un autre avantage est que la pré-compensation de phase du signal peut être réalisée à très faible puissance optique en amont de la chaîne d'amplification optique, ce qui minimise les contraintes sur l'efficacité de diffraction et la tenue au flux du modulateur spatial.

Plus précisément, la présente invention a pour objet un dispositif laser comportant un laser délivrant un faisceau porteur d'une onde signal dit faisceau signal et un ensemble de fibres amplificatrices délivrant un ensemble d'ondes optiques alimenté par ladite onde signal caractérisé en ce qu'il comporte :
- des moyens pour délivrer un faisceau sonde à une longueur d'onde sensiblement égale à celle de l'onde signal ;
- des moyens pour créer un faisceau de référence cohérent avec le faisceau sonde ;
- des moyens pour co-propager dans lesdites fibres amplificatrices, alternativement, le faisceau sonde et le faisceau signal, ledit faisceau sonde étant propagé périodiquement pendant une durée dite durée sonde ;
- des moyens pour faire interférer en sortie de l'ensemble des fibres amplificatrices, le faisceau sonde et le faisceau de référence de manière à définir un interférogramme ;
- un détecteur matriciel capable de générer un hologramme numérique à partir dudit interférogramme ;
- un modulateur spatial de phase alimenté par ledit hologramme numérique pour diffracter dans l'ordre -1 le faisceau dit signal en entrée de l'ensemble des fibres amplificatrices, ledit modulateur spatial présentant des caractéristiques de taux de rafraîchissement de loi de phase.

Avantageusement, les trois faisceaux : sonde, référence et signal peuvent être issus d'un même laser maître et le dispositif laser peut comporter un commutateur optique alimenté par ledit laser maître, ledit commutateur optique présentant une porte temporelle pour délivrer deux faisceaux temporellement complémentaires : le faisceau sonde et le faisceau dit signal.

Selon une variante de l'invention, la durée sonde est inférieure ou égale à la durée de la porte temporelle et typiquement comprise entre environ 100 nanosecondes et 1 microseconde.

Selon une variante de l'invention le faisceau sonde est délivré avec une fréquence comprise entre environ 100 Hz et 1 kHz, correspondant à une fréquence compatible au taux de rafraichissement de la loi de phase du modulateur spatial.

Selon une variante de l'invention, le commutateur est un modulateur électro-optique.

Selon une variante de l'invention, le commutateur est un modulateur acousto-optique.

Selon une variante de l'invention, le dispositif comprend des moyens d'atténuation ou de gain couplés audit commutateur optique de manière à égaliser les puissances de sortie du faisceau sonde et du faisceau signal.

Selon une variante de l'invention, les moyens pour faire interférer le faisceau de référence et les faisceaux en sortie desdites fibres de manière à définir un interférogramme comprennent deux lames séparatrices.

Selon une variante de l'invention, ledit détecteur matriciel capable de générer un hologramme numérique à partir dudit interférogramme est une matrice de type CCD (Charge-Coupled Device) ou CMOS (Complementary Metal Oxide Semiconductor).

Avantageusement le détecteur matriciel présente une ouverture temporelle synchronisée et centrée sur la porte temporelle qui peut être du même ordre de grandeur que la durée sonde, typiquement cette ouverture temporelle peut être comprise entre 100 nanosecondes et une microseconde. Le dispositif peut comporter dans ce cas, un générateur permettant de synchroniser la durée sonde et l'ouverture temporelle du détecteur matriciel.

Selon une variante de l'invention, le modulateur spatial de phase est de type dispositif à cristal liquide LCD.

Selon une variante de l'invention, le modulateur spatial de phase comprend des composants correspondant à des microsystèmes opto-électromécaniques (appelés MOEMS pour l'acronyme de Micro-Opto-Electro-Mechanical Systems).

Selon une variante de l'invention, les fibres sont couplées à des lentilles de collimation.

L'invention sera mieux comprise et d'autres avantages apparaîtront à la lecture de la description qui va suivre donnée à titre non limitatif et grâce aux figures annexées parmi lesquelles :
- la figure 1 schématise un dispositif laser de puissance avec un dispositif auto-adaptatif de l'art antérieur ;
- la figure 2 illustre une chaîne d'amplification à fibres utilisée dans des dispositifs laser de puissance selon l'art connu ;
- la figure 3 illustre un dispositif laser de puissance intégrant un dispositif auto-adaptatif selon la présente invention.

Selon la présente invention, la solution proposée consiste à reprendre le principe auto-adaptatif de l'art connu et à modifier les propriétés du faisceau sonde afin qu'il puisse être co-propagé avec le signal.

Pour cela, il est proposé de découper une porte temporelle dans le signal issu d'un oscillateur maître et de se servir de l'impulsion résultante comme faisceau sonde. Dans ce cas, le faisceau sonde est directement introduit dans les N canaux d'amplificateurs à fibre, alors que le signal est d'abord diffracté avant d'être couplé dans les N canaux d'amplificateurs.

Cette porte temporelle est typiquement réalisable à l'aide d'un modulateur d'intensité. On peut s'arranger pour égaliser la puissance crête de la sonde et du signal pour faire en sorte que les amplificateurs voient un flux continu et que le déphasage vu par la sonde soit identique à celui vu par le signal (dans l'hypothèse d'un déphasage non-linéaire).

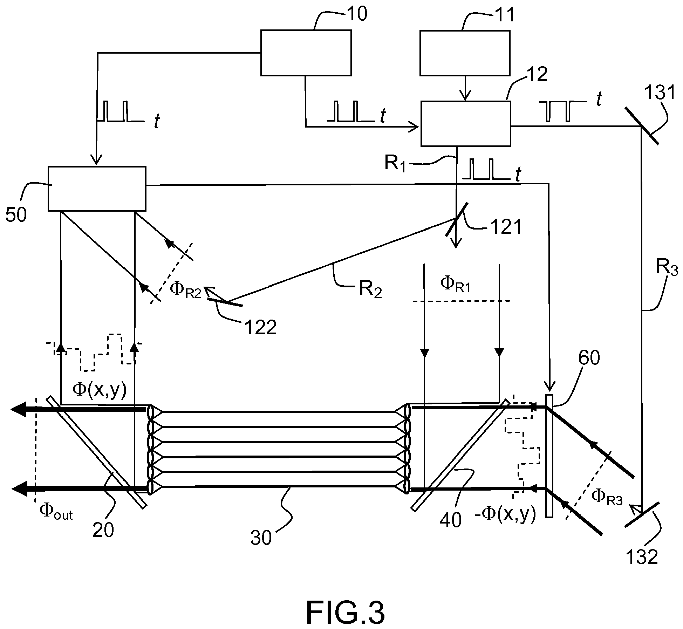

Plus précisément et comme montré en figure 3 qui illustre un exemple de dispositif selon l'invention, le dispositif peut avantageusement comprendre un laser continu 11 alimentant un commutateur optique 12 couplé à un générateur 10 et permettant de générer une porte temporelle, dont sont issus de manière séquencée dans le temps :
- un faisceau R₃ destiné à être propagé, via des moyens de type miroirs de renvoi 131, 132, en direction d'un modulateur de phase 60, de type LCD ;
- un faisceau R₁ dont est issu, un faisceau de référence R₂ propagé en direction de moyens de détection de type caméra 50, via des miroirs de renvoi 121, 122.

Le générateur 10 permet de synchroniser la durée sonde représentée par un créneau et l'ouverture du détecteur matriciel 50.

Ainsi, depuis le commutateur 12, un des faisceaux est utilisé pour la sonde, l'autre pour le signal à amplifier. Le faisceau R₁ est couplé dans le réseau de fibres amplificatrices via des moyens optiques 40.

Le faisceau R₃ est couplé dans le réseau de fibres après diffraction par le modulateur spatial 60.

Après amplification, une faible quantité du signal de sortie est prélevée à l'aide par exemple d'une lame séparatrice 20 et la séparation de la partie correspondant à la sonde R₁ amplifiée se fait simplement en synchronisant le temps d'ouverture de la caméra avec le signal temporel R₁.

En pratique, on pourra choisir un temps d'ouverture légèrement inférieur pour s'assurer que le signal R₂ amplifié ne contribue pas à l'hologramme.

La période du signal correspond au taux de rafraichissement souhaité de la loi de phase sur le modulateur de phase. Celle-ci peut être de l'ordre de 100 Hz à typiquement 1 kHz suivant les conditions environnementales (fluctuations de température, vibrations). La durée du créneau du faisceau R₁ est minimisée pour que l'essentiel du signal de sortie soit la composante en phase. Il est par exemple possible d'obtenir une durée d'ouverture de l'ordre de 1 µs avec un grand nombre de caméras CCD ou CMOS.

En sortie, et après prélèvement d'une faible partie du faisceau amplifié, on peut facilement isoler la sonde en synchronisant la porte sur la camera CCD.

Pour donner un exemple, un porte d'environ 1 µs est tout à fait envisageable du point de vue du modulateur et de l'emploi d'une caméra de type CCD. Si on suppose un taux de rafraichissement de 100 Hz, la partie du faisceau amplifié non en phase, et correspondant à la sonde amplifiée, est de seulement 10⁻⁴.

Il est encore possible d'utiliser des caméras avec une fonction porte permettant encore de diminuer le temps d'ouverture. Les valeurs prises en exemple montrent que la partie non en phase du signal de sortie est inférieure à 10⁻³ de la puissance totale émise. On suppose pour cela que la puissance crête du faisceau sonde R₁ est égale à celle du faisceau signal R₃ diffracté, à l'entrée du réseau d'amplificateurs, de sorte que la puissance se propageant dans l'amplificateur soit continue. Ceci est en pratique souhaitable pour garantir que les variations de phase vues par la sonde et le signal soient les mêmes (variations de phase liées à des effets optiques non linéaires). Cette égalisation peut facilement être obtenue par l'insertion d'atténuateurs variables fibrés à la sortie du commutateur (non représentés sur la figure 3).

Le commutateur 12 peut être par exemple un modulateur optique intégré niobate de lithium fibré. Ce type de composant est disponible commercialement avec des bandes passantes dépassant 1 GHz et couvrant largement le besoin. D'autres types de modulateurs électro-optiques ou acousto-optiques peuvent être aussi utilisés.

Il est également possible d'insérer un modulateur d'intensité après la sortie du faisceau R₃ du commutateur, pour augmenter le contraste (taux d'extinction) si besoin. La transformation des faisceaux se propageant sur fibre en faisceaux de grande dimension (onde plane) se propageant librement est obtenue par des moyens optiques classiques (lentilles de collimation, télescope, ..).

Selon la présente invention, de même que dans la demande de brevet précédente du Demandeur, la phase relative entre fibres est détectée par interférence et le résultat de ces interférences est un réseau de franges de même pas et dont la phase relative vaut ϕi (x), recueilli par la matrice de détection. En sortie de cette matrice, le signal correspondant sert à la commande du modulateur de phase.

Le positionnement des franges traduit le déphasage entre les fibres. Si ces phases évoluent en raison d'effets dits « lents » par exemple de température, de contraintes, bruit acoustique,..., les interférences peuvent périodiquement être détectées en temps réel.

Il est à noter que l'angle entre la direction du faisceau sonde et celle du faisceau signal qui interférent, est avantageusement faible (typiquement inférieur à 1 degré) de manière à détecter chaque période spatiale avec un grand nombre de pixels.

## Revendications

1. Dispositif laser comportant un laser (10) délivrant un faisceau porteur d'une onde signal dit faisceau signal et un ensemble de fibres amplificatrices (30) délivrant un ensemble d'ondes optiques alimenté par ladite onde signal **caractérisé en ce qu'**il comporte :
- des moyens pour délivrer un faisceau sonde (R₁) à une longueur d'onde sensiblement égale à celle de l'onde signal ;
- des moyens pour créer un faisceau de référence (R₂) cohérent avec le faisceau sonde ;
- des moyens pour co-propager dans lesdites fibres amplificatrices, alternativement, le faisceau sonde (R₁) et le faisceau signal (R₃), ledit faisceau sonde étant propagé périodiquement pendant une durée sonde ;
- des moyens pour faire interférer en sortie de l'ensemble des fibres amplificatrices, le faisceau sonde (R₁) et le faisceau de référence (R₂) de manière à définir un interférogramme ;
- un détecteur matriciel (50) capable de générer un hologramme numérique à partir dudit interférogramme ;
- un modulateur spatial de phase (60) alimenté par ledit hologramme numérique pour diffracter dans l'ordre -1, le faisceau dit signal (R₃) en entrée de l'ensemble des fibres amplificatrices, ledit modulateur spatial présentant des caractéristiques de taux de rafraîchissement de loi de phase.

2. Dispositif laser selon la revendication 1, **caractérisé en ce qu'**il comporte un commutateur optique alimenté par un laser maître, ledit commutateur optique présentant une porte temporelle pour délivrer deux faisceaux temporellement complémentaires : le faisceau sonde (R₁) et le faisceau dit signal (R₃).

3. Dispositif laser selon la revendication 2, **caractérisé en ce que** la durée sonde est inférieure ou égale à la durée de la porte temporelle et typiquement comprise entre environ 100 nanosecondes et 1 microseconde.

4. Dispositif laser selon l'une des revendications 2 ou 3 **caractérisé en ce que** ladite porte temporelle est ouverte avec une fréquence correspondant à une fréquence compatible au taux de rafraichissement de la loi de phase du modulateur spatial, comprise entre environ 100 Hz et 1 kHz.

5. Dispositif laser selon l'une des revendications 2 à 4, **caractérisé en ce que** le commutateur est un modulateur électro-optique.

6. Dispositif laser selon la revendication 5, **caractérisé en ce que** ledit commutateur est un modulateur optique intégré en niobate de lithium fibré.

7. Dispositif laser selon l'une des revendications 2 à 4, **caractérisé en ce que** le commutateur est un modulateur acousto-optique.

8. Dispositif laser selon l'une des revendications 1 à 4, **caractérisé en ce qu'**il comprend des moyens d'atténuation ou de gain couplés audit commutateur optique de manière à égaliser les puissances de sortie du faisceau sonde (R₁) et du faisceau signal (R₃).

9. Dispositif laser selon l'une des revendications 1 à 7, **caractérisé en ce que** les moyens (121, 122) pour faire interférer le faisceau de référence (R₂) et les faisceaux en sortie desdites fibres de manière à définir un interférogramme comprennent deux lames séparatrices.

10. Dispositif laser selon l'une des revendications 1 à 9, **caractérisé en ce que** ledit détecteur matriciel capable de générer un hologramme numérique à partir dudit interférogramme est une matrice de type CCD ou CMOS.

11. Dispositif laser selon l'une des revendications 1 à 10, **caractérisé en ce que** le détecteur matriciel présente une ouverture temporelle du même ordre de grandeur que la durée sonde.

12. Dispositif laser selon la revendication 11, **caractérisé en ce qu'**il comporte un générateur (11) permettant de synchroniser la durée sonde et l'ouverture temporelle du détecteur matriciel.

13. Dispositif laser selon l'une des revendications 1 à 12, **caractérisé en ce que** le modulateur spatial de phase est un dispositif à cristal liquide LCD.

14. Dispositif laser selon l'une des revendications 1 à 12, **caractérisé en ce que** le modulateur spatial de phase comprend des composants MOEMS.

15. Dispositif laser selon l'une des revendications 1 à 14, **caractérisé en ce que** les fibres sont couplées à des lentilles de collimation.

## Patentansprüche

1. Laservorrichtung, umfassend einen Laser (10), der einen Trägerstrahl einer Signalwelle ausgibt, der als Signalstrahl bezeichnet wird, und eine Verstärkungsfasereinheit (30), die eine optische Welleneinheit ausgibt, die durch die Signalwelle versorgt wird, **dadurch gekennzeichnet, dass** sie umfasst:
- Mittel zum Ausgeben eines Abtaststrahls (R₁) mit einer Wellenlänge, die im Wesentlichen gleich wie die der Signalwelle ist;
- Mittel zum Erzeugen eines Referenzstrahls (R₂), der mit dem Abtaststrahl kohärent ist;
- Mittel zum gemeinsamen abwechselnden Ausbreiten des Abtaststrahls (R₁) und des Signalstrahls (R₃) in den Verstärkungsfasern, wobei der Abtaststrahl periodisch während einer Abtastdauer ausgebreitet wird;
- Mittel zum Interferieren des Abtaststrahls (R₁) und des Referenzstrahls (R₂) am Ausgang der Verstärkungsfasereinheit, um ein Interferogramm zu definieren;
- einen Matrizendetektor (50), der in der Lage ist, ein digitales Hologramm anhand des Interferogramms zu erzeugen;
- einen räumlichen Phasenmodulator (60), der durch das digitale Hologramm versorgt wird, um den sogenannten Signalstrahl (R₃) am Eingang der Verstärkungsfasereinheit in der Ordnung -1 zu beugen, wobei der räumliche Modulator Auffrischungsraten-Merkmale des Phasengesetzes aufweist.

2. Laservorrichtung nach Anspruch 1, **dadurch gekennzeichnet, dass** sie eine optische Schaltung umfasst, die von einem Master-Laser versorgt wird, wobei die optische Schaltung ein temporales Tor zum Ausgeben von zwei temporal komplementären Strahlen umfasst: den Abtaststrahl (R₁) und den sogenannten Signalstrahl (R₃).

3. Laservorrichtung nach Anspruch 2, **dadurch gekennzeichnet, dass** die Abtastdauer kleiner als oder gleich wie die Dauer des temporalen Tors ist und normalerweise zwischen ca. 100 Nanosekunden und 1 Mikrosekunde liegt.

4. Laservorrichtung nach einem der Ansprüche 2 oder 3, **dadurch gekennzeichnet, dass** das temporale Tor mit einer Frequenz offen ist, die einer Frequenz entspricht, die mit der Auffrischungsrate des Phasengesetzes des räumlichen Modulators kompatibel ist, die zwischen ca. 100 Hz und 1 kHz liegt.

5. Laservorrichtung nach einem der Ansprüche 2 ä 4, **dadurch gekennzeichnet, dass** die Schaltung ein elektrooptischer Modulator ist.

6. Laservorrichtung nach Anspruch 5, **dadurch gekennzeichnet, dass** der Umschalter ein optischer Modulator ist, der in Faser-Lithiumniobat integriert ist.

7. Laservorrichtung nach einem der Ansprüche 2 bis 4, **dadurch gekennzeichnet, dass** der Umschalter ein akustooptischer Modulator ist.

8. Laservorrichtung nach einem der Ansprüche 1 bis 4, **dadurch gekennzeichnet, dass** sie Dämpfungs- oder Verstärkungsmittel umfasst, die mit der optischen Schaltung gekoppelt sind, um die Ausgangsleistungen des Abtaststrahls (R₁) und des Signalstrahls (R₃) anzugleichen.

9. Laservorrichtung nach einem der Ansprüche 1 bis 7, **dadurch gekennzeichnet, dass** die Mittel (121, 122) zum Interferieren des Referenzstrahls (R₂) und der Strahlen am Ausgang der Fasern zu interferieren, um ein Interferogramm umfassend zwei Strahlteiler zu definieren.

10. Laservorrichtung nach einem der Ansprüche 1 bis 9, **dadurch gekennzeichnet, dass** der Matrizendetektor, der in der Lage ist, ein digitales Hologramm anhand des Interferogramms zu erzeugen, eine Matrize vom Typ CCD oder CMOS ist.

11. Laservorrichtung nach einem der Ansprüche 1 bis 10, **dadurch gekennzeichnet, dass** der Matrizendetektor eine temporale Öffnung derselben Größenordnung wie die Abtastdauer aufweist.

12. Laservorrichtung nach Anspruch 11, **dadurch gekennzeichnet, dass** sie einen Generator (11) umfasst, der ermöglicht, die Abtastdauer und die temporale Öffnung des Matrizendetektors zu synchronisieren.

13. Laservorrichtung nach einem der Ansprüche 1 bis 12, **dadurch gekennzeichnet, dass** der räumliche Modulator eine Flüssigkristall-LCD-Vorrichtung ist.

14. Laservorrichtung nach einem der Ansprüche 1 bis 12, **dadurch gekennzeichnet, dass** der räumliche Phasenmodulator MOEMS-Komponenten umfasst.

15. Laservorrichtung nach einem der Ansprüche 1 bis 14, **dadurch gekennzeichnet, dass** die Fasern mit Kollimationslinsen gekoppelt sind.

## Claims

1. Laser device comprising a laser (10) delivering a beam carrying a signal wave designated signal beam and a set of amplifying fibres (30) delivering a set of optical waves fed by said signal wave **characterised in that** it comprises:
- means for delivering a probe beam (R₁) with a wavelength substantially equal to that of the signal wave;
- means for creating a reference beam (R₂) coherent with the probe beam;
- means for co-propagating in said amplifying fibres, alternately, the probe beam (R₁) and the signal beam (R₃), said probe beam being propagated periodically during a probe period;
- means for interfering at the output of the set of amplifying fibres, the probe beam (R₁) and the reference beam (R₂) so as to define an interferogram;
- an array sensor (50) capable of generating a digital hologram from said interferogram;
- a spatial phase modulator (60) fed by said digital hologram to diffract in the order of -1, the beam designated signal (R3) at the entrance of the set of amplifying fibres, said spatial modulator presenting phase law refresh rate characteristics.

2. Laser device according to claim 1, **characterised in that** it comprises an optical switch fed by a master laser, said optical switch presenting a time gate for delivering two temporally complementary beams: the probe beam (R₁) and the beam designated signal (R₃).

3. Laser device according to claim 2, **characterised in that** the probe period is smaller or equal to the time gate period and typically ranges between approximately 100 nanoseconds and 1 microsecond.

4. Laser device according to one of claims 2 or 3 **characterised in that** said time gate is open with a frequency corresponding to a frequency compatible with the phase law refresh rate of the spatial modulator, which ranges between 100 Hz and 1 kHz.

5. Laser device according to one of claims 2 to 4, **characterised in that** the switch is an electro-optic modulator.

6. Laser device according to claim 5, **characterised in that** said switch is an integrated optical modulator in lithium niobate fibre.

7. Laser device according to one of claims 2 to 4, **characterised in that** the switch is an acousto-optic modulator.

8. Laser device according to one of claims 1 to 4, **characterised in that** it comprises means of attenuation or of gain coupling to said optical switch so as to equalise the power outputs of the probe beam (R₁) and the signal beam (R₃).

9. Laser device according to one of claims 1 to 7, **characterised in that** the means (121, 122) for interfering the reference beam (R₂) and the beams at the output of said fibres so as to define an interferogram comprise two beam splitters.

10. Laser device according to one of claims 1 to 9, **characterised in that** said array sensor capable of generating a digital hologram from said interferogram is a CCD or CMOS matrix.

11. Laser device according to one of claims 1 to 10, **characterised in that** the array sensor presents a temporal opening of the same order of magnitude as the probe period.

12. Laser device according to claim 11, **characterised in that** it comprises a generator (11) enabling synchronisation of the probe period and the temporal opening of the array sensor.

13. Laser device according to one of claims 1 to 12, **characterised in that** the spatial phase modulator is an LCD liquid crystal device.

14. Laser device according to one of claims 1 to 12, **characterised in that** the spatial phase modulator comprises MOEMS components.

15. Laser device according to one of claims 1 to 14, **characterised in that** the fibres are coupled to collimating lenses.
